# EUROPÄISCHE PATENTSCHRIFT

(11) **EP 0 569 759 B1**
(45) Veröffentlichungstag und Bekanntmachung des Hinweises auf die Patenterteilung: **13.08.1997**
(21) Anmeldenummer: 93106677.3
(22) Anmeldetag: 24.04.1993
(51) Int. Cl.: C09B 29/045, C09B 29/033, B41M 5/38, C09B 67/22

(54) **Benzisothiazolazofarbstoffe mit einer Kupplungskomponente aus der Anilinreihe**
Benzisothiazolazo dyes with a coupling component of the aniline series
Colorants de type benzisothiazolazoiques ayant un copulant de la famille de l'aniline

(30) Priorität: 11.05.1992 DE 4215392
(43) Veröffentlichungstag der Anmeldung: 18.11.1993
(73) Patentinhaber: BASF Aktiengesellschaft, 67063 Ludwigshafen (DE)
(72) Erfinder: Roetsch, Thomas, Dr., W-6700 Ludwigshafen (DE); Hagen, Helmut, Dr., W-6710 Frankenthal (DE); Reichelt, Helmut, Dr., W-6730 Neustadt (DE); Grund, Clemens, Dr., W-6800 Mannheim 24 (DE)

(56) Entgegenhaltungen:
- FR-A- 2 301 571
- FR-A- 2 441 644
- EGYPTIAN JOURNAL OF CHEMISTRY Bd. 16, Nr. 1, 1973, NIDOC, DOKKI, CAIRO Seiten 49 - 68 M.KAMEL ET AL. 'Studies of some new monoazo dyes containing the benzo(b)thiophene nucleus'
- JOURNAL OF MEDICINAL CHEMISTRY Bd. 6, Nr. 1, M rz 1963, WASHINGTON US Seiten 217 - 219 E.F.ELSLAGER ET AL. 'Ä4-(aminoalkylamino)-1-naphthylazoÜ heterocyclic compounds, a novel class of schistosomicides'

## Beschreibung

Die vorliegende Erfindung betrifft neue Azofarbstoffe der Formel I 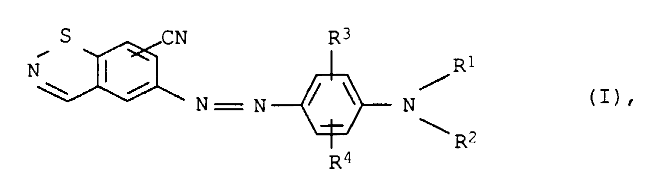 in der
- R¹ und R²: gleich oder verschieden sind und unabhängig voneinander jeweils C₁-C₁₀-Alkyl, das gegebenenfalls durch 1 oder 2 Sauerstoffatome in Etherfunktion unterbrochen ist und durch Phenyl, Cyano, C₁-C₄-Alkoxycarbonyl, C₁-C₄-Alkoxycarbonyloxy, Hydroxy oder C₁-C₄-Alkanoyloxy substituiert sein kann, oder gegebenenfalls durch Chlor substituiertes C₃-C₄-Alkenyl oder R¹ zusätzlich Wasserstoff,
- R³: Wasserstoff oder C₁-C₄-Alkoxy und
- R⁴: C₁-C₆-Alkyl, C₁-C₄-Alkoxy, gegebenenfalls durch Halogen, Cyano, Hydroxy, C₁-C₄-Alkoxy, Phenoxy oder C₁-C₄-Alkanoyloxy substituiertes C₁-C₈-Alkanoylamino, C₁-C₄-Alkylsulfonylamino, C₃-C₄-Alkenoylamino oder gegebenenfalls durch C₁-C₄-Alkoxy substituiertes C₁-C₄-Alkoxycarbonylamino bedeuten,
ihre Verwendung zum Färben oder Bedrucken von textilen Fasern oder Geweben sowie die Verwendung von Aminobenzheterocyclen als Diazokomponente.

Aus der EP-A-390 024 sowie der EP-A-400 451 sind Azofarbstoffe bekannt, die eine Diazokomponente aus der Aminobenzisothiazolreihe und eine Kupplungskomponente aus der Pyrazol- oder Pyridonreihe sowie Isothiazol- oder Diaminopyridinreihe aufweisen.

Weiterhin sind aus Egypt. J. Chem., Band 16, Seiten 49 bis 68, 1973, Azofarbstoffe bekannt, die 5-Aminobenzthiophen als Diazokomponente aufweisen. J. Med. Chem., Band 6, Seiten 217 bis 219, 1963, beschreibt Azofarbstoffe, deren Diazokomponente u.a. 5-Aminobenzisothiazol ist.

Auch aus der FR-A-2 301 571 und FR-A-2 441 644 sind Azofarbstoffe bekannt, deren Diazokomponente aus der Aminobenzisothiazolreihe stammt.

Aufgabe der vorliegenden Erfindung war es, neue Azofarbstoffe bereitzustellen, die eine Kupplungskomponente aus der Anilinreihe aufweisen. Die Diazokomponente sollte aus der Aminobenzisothiazolreihe stammen. Die neuen Azofarbstoffe sollten sich durch vorteilhafte anwendungstechnische Eigenschaften auszeichnen.

Demgemäß wurden die eingangs näher bezeichneten Azofarbstoffe der Formel I gefunden.

Alle in den obengenannten Formeln auftretenden Alkyl- oder Alkenylgruppen können sowohl geradkettig als auch verzweigt sein.

Wenn die Alkylreste Substituenten tragen, so sind sie in der Regel 1- oder 2-fach substituiert.

Reste R¹, R² und R⁴ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste R³ sind, wie weiterhin auch Reste R⁴ und R⁵, z.B. Methoxy, Ethoxy, Propoxy, Isopropoxy, Butoxy, Isobutoxy oder sec-Butoxy.

Reste R¹ und R² sind weiterhin z.B. Heptyl, Octyl, 2-Ethylhexyl, Isooctyl, Nonyl, Isononyl, Decyl, Benzyl, 1- oder 2-Phenylethyl, Cyanomethyl, 2-Cyanoethyl, 3-Cyanopropyl, 2-Cyanobutyl, 4-Cyanobutyl, 5-Cyanopentyl, 6-Cyanohexyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8 Dioxadecyl, Methoxycarbonylmethyl, Ethoxycarbonylmethyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonylpentyl, 5-Ethoxycarbonylpentyl, 6-Methoxycarbonylhexyl, 6-Ethoxycarbonylhexyl, 2-Methoxycarbonyloxyethyl, 2-Ethoxycarbonyloxyethyl, 2- oder 3-Methoxycarbonyloxypropyl, 2- oder 3-Ethoxycarbonyloxypropyl, 2-Acetyloxyethyl, 2-Propionyloxyethyl, 2- oder 3-Acetyloxypropyl, 2- oder 3-Propionyloxypropyl, 2- oder 4-Acetyloxybutyl, 2- oder 4-Propionyloxybutyl, Prop-2-en-1-yl, But-2-en-1-yl, 2-Methylprop-2-en-1-yl, 3-Chlorprop-2-en-1-yl oder 4-Chlorbut-2-en-1-yl.

Reste R⁴ sind weiterhin z.B. Acetylamino, Propionylamino, Butyrylamino, Isobutyrylamino, 2-Ethylhexanoylamino, Methoxyacetylamino, Ethoxyacetylamino, Phenoxyacetylamino, 2- oder 3-Methoxypropionylamino, Chloracetylamino, Cyanoacetylamino, Hydroxyacetylamino, Acetyloxyacetylamino, Methylsulfonylamino, Ethylsulfonylamino, Propylsulfonylamino, Isopropylsulfonylamino, Butylsulfonylamino, Acroylamino, Methacroylamino, Methoxycarbonylamino, Ethoxycarbonylamino, Propoxycarbonylamino, Isopropoxycarbonylamino, Butoxycarbonylamino, 2-Methoxyethoxycarbonylamino oder 2-Ethoxyethoxycarbonylamino.

Hervorzuheben sind Azofarbstoffe, die der Formel Ia 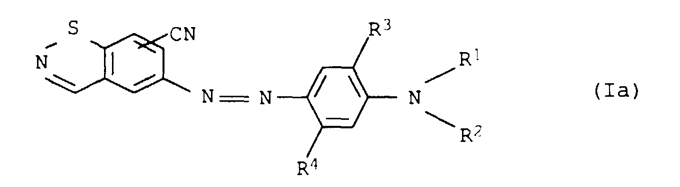 gehorchen, in der R¹, R², R³, und R⁴ jeweils die obengenannte Bedeutung besitzen.

Besonders hervorzuheben sind Azofarbstoffe, die der Formel Ib 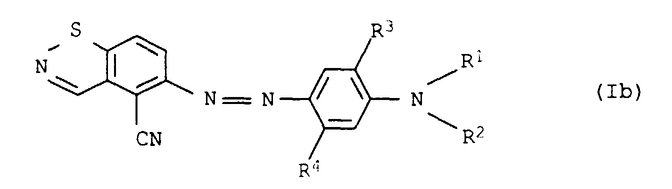 gehorchen, in der R¹, R², R³, und R⁴ jeweils die obengenannte Bedeutung besitzen.

Bevorzugt sind Azofarbstoffe der Formel I, in der R³ Wasserstoff bedeutet.

Weiterhin bevorzugt sind Azofarbstoffe der Formel I, in der R¹ und R² unabhängig voneinander jeweils C₁-C₆-Alkyl, das gegebenenfalls durch 1 Sauerstoffatom in Etherfunktion unterbrochen ist und durch Phenyl, Cyano, C₁-C₄-Alkoxycarbonyl oder Hydroxy substituiert sein kann, oder gegebenenfalls durch Chlor substituiertes C₃-C₄-Alkenyl bedeuten.

Weiterhin bevorzugt sind Azofarbstoffe der Formel I, in der R⁴ C₂-C₄-Alkanoylamino, das gegebenenfalls durch C₁-C₄-Alkoxy oder Phenoxy substituiert ist, oder C₁-C₄-Alkylsulfonylamino bedeutet.

Die vorliegende Erfindung betrifft weiterhin die Verwendung von Aminobenzisothiazolen der Formel II 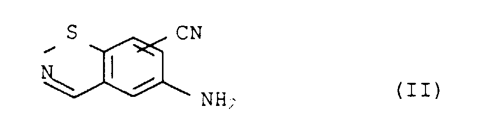 als Diazokomponente bei der Herstellung von Azofarbstoffen.

Die neuen Azofarbstoffe der Formel I können nach an sich bekannter Weise erhalten werden. Beispielsweise kann man ein Aminobenzisothiazol der Formel II auf an sich bekanntem Weg diazotieren und mit einem Anilinderivat der Formel III 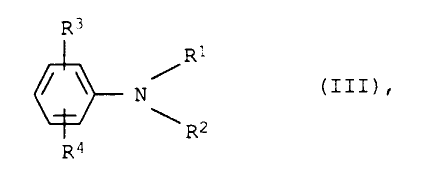 in der R¹, R², R³ und R⁴ jeweils die obengenannte Bedeutung besitzen, kuppeln.

Bei den Anilinen der Formel III handelt es sich in der Regel um an sich bekannte Verbindungen. Diazokomponenten aus der Aminobenzisothiazolreihe sind z.B. in der WO-A-9304057 beschrieben oder können nach den dort genannten Methoden erhalten werden.

Die erfindungsgemäßen Azofarbstoffe der Formel I eignen sich als Dispersionsfarbstoffe vorteilhaft zum Färben oder Bedrucken von textilen Fasern oder Geweben, insbesondere von Polyestern, daneben auch von Fasern oder Geweben aus Celluloseestern oder Polyamiden oder Mischgeweben aus Polyestern und Cellulosefasern.

Um einen günstigen Farbaufbau zu erreichen, kann es in manchen Fällen von Vorteil sein, Mischungen der Farbstoffe der Formel I untereinander zum Färben zu verwenden.

Die neuen Azofarbstoffe zeichnen sich durch hohe Farbstärke, gute Echtheiten und brillante Farbtöne aus.

Die erfindungsgemäßen Azofarbstoffe eignen sich weiterhin vorteilhaft für die thermische Übertragung von einem Träger auf ein mit Kunststoff beschichtetes Papier mittels einer Energiequelle (siehe z.B. EP-A-416 434).

Die folgenden Beispiele sollen die Erfindung näher erläutern.

### Beispiel 1

a) 4,40 g (0,025 mol) 5-Amino-4-cyanobenzisothiazol wurden in 60 ml Eisessig/Propionsäure (3:1 v/v) und 10 ml 85 gew.-%iger Schwefelsäure gelöst, bei -5 bis 0°C mit 13 g Nitrosylschwefelsäure (ca. 42 % N₂O₃) versetzt und 3 Stunden bei -5 bis 0°C gerührt.
b) 7,10 g (0,027 mol) 3-Diethylaminoacetanilid wurden in 150 ml Wasser und 2,5 ml 96 gew.-%iger Schwefelsäure gelöst, mit 0,50 g Amidosulfonsäure und ca. 500 g Eis vorgelegt und bei -5 bis 0°C mit der unter a) beschriebenen Diazoniumsalzlösung versetzt. Nach Beendigung der Kupplung wurde der Farbstoff bei 60°C abgesaugt, neutral gewaschen und getrocknet. Man erhielt 8,40 g (86 % d. Th.) des Farbstoffs der Formel 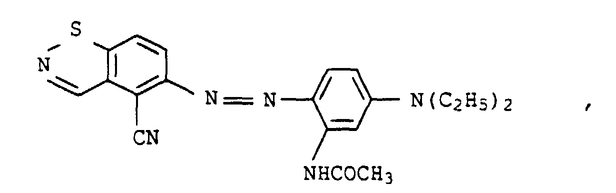 der Polyestergewebe in roter Nuance färbt.

In analoger Weise werden die in der folgenden Tabelle aufgeführten Farbstoffe der Formel 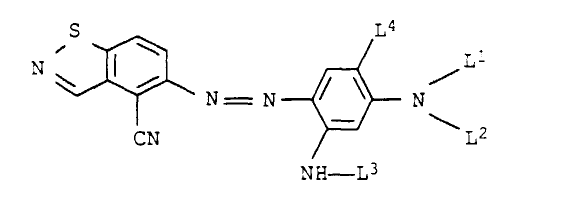 erhalten.

**Tabelle**

| Bsp. Nr. | L¹ | L² | L³ | L⁴ | Farbton auf Polyester |
|---|---|---|---|---|---|
| 2 | C₂H₅ | C₂H₅ | COCH₂OCH₃ | H | gelbstichig rot |
| 3 | C₂H₄OCOCH₃ | C₂H₄OCOCH₃ | COCH₃ | H | gelbstichig rot |
| 4 | C₂H₄OCH₃ | C₂H₄OCH₃ | COCH₂OC₆H₅ | H | gelbstichig rot |
| 5 | C₂H₅ | C₂H₅ | COOC₂H₄OC₂H₅ | H | gelbstichig rot |
| 6 | C₂H₅ | C₂H₅ | SO₂CH₃ | H | gelbstichig rot |
| 7 | C₂H₄OCH₃ | C₂H₄OCH₃ | SO₂CH₃ | H | gelbstichig rot |
| 8 | C₂H₅ | C₂H₅ | SO₂C₃H₇ | H | gelbstichig rot |
| 9 | CH₂CH=CH₂ | CH₂CH=CH₂ | COCH₃ | H | gelbstichig rot |
| 10 | CH₂CH=CHCl | CH₂CH=CHCl | COCH₃ | H | rot |
| 11 | C₂H₄OC₂H₅ | C₂H₄OC₂H₅ | OCH₃ | OC₂H₅ | violett |
| 12 | C₂H₄OC₂H₅ | C₂H₄OC₂H₅ | COCH₃ | OCH₃ | violett |

## Patentansprüche

1. Azofarbstoffe der Formel I 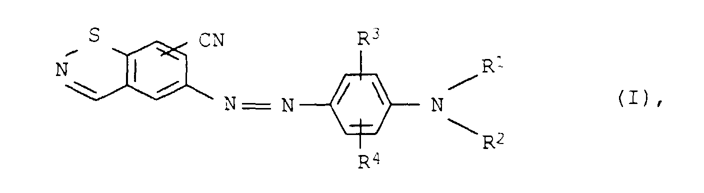 in der
R¹ und R² gleich oder verschieden sind und unabhängig voneinander jeweils C₁-C₁₀-Alkyl, das gegebenenfalls durch 1 oder 2 Sauerstoffatome in Etherfunktion unterbrochen ist und durch Phenyl, Cyano, C₁-C₄-Alkoxycarbonyl, C₁-C₄-Alkoxycarbonyloxy, Hydroxy oder C₁-C₄-Alkanoyloxy substituiert sein kann, oder gegebenenfalls durch Chlor substituiertes C₃-C₄-Alkenyl oder R¹ zusätzlich Wasserstoff,
R³ Wasserstoff oder C₁-C₄-Alkoxy und
R⁴ C₁-C₆-Alkyl, C₁-C₄-Alkoxy, gegebenenfalls durch Halogen, Cyano, Hydroxy, C₁-C₄-Alkoxy, Phenoxy oder C₁-C₄-Alkanoyloxy substituiertes C₁-C₈-Alkanoylamino, C₁-C₄-Alkylsulfonylamino, C₃-C₄-Alkenoylamino oder gegebenenfalls durch C₁-C₄-Alkoxy substituiertes C₁-C₄-Alkoxycarbonylamino bedeuten.

2. Verwendung der Azofarbstoffe gemäß Anspruch 1 zum Färben oder Bedrucken von textilen Fasern oder Geweben.

3. Verwendung von Aminobenzisothiazolen der Formel II 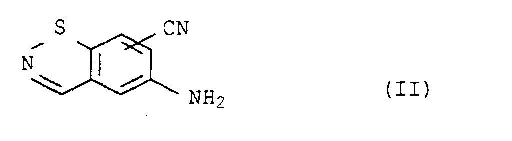 als Diazokomponente bei der Herstellung von Azofarbstoffen.

## Claims

1. Azo dyes of the formula I 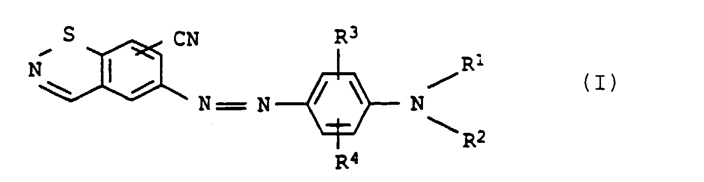 where
R¹ and R² are identical or different and each is independently of the other C₁-C₁₀-alkyl, which may be interrupted by 1 or 2 oxygen atoms in ether function and may be phenyl-, cyano-, C₁-C₄-alkoxycarbonyl-, C₁-C₄ -alkoxycarbonyloxy-, hydroxyl- or C₁-C₄-alkanoyloxy-substituted, or unsubstituted or chlorine-substituted C₃-C₄-alkenyl, or additionally in the case of R¹ hydrogen,
R³ is hydrogen or C₁-C₄-alkoxy, and
R⁴ is C₁-C₆-alkyl, C₁-C₄-alkoxy, unsubstituted or halogen-, cyano-, hydroxyl-, C₁-C₄-alkoxy-, phenoxy- or C₁-C₄-alkanoyloxy-substituted C₁-C₈-alkanoylamino, C₁-C₄-alkylsulfonylamino, C₃-C₄-alkenoylamino or unsubstituted or C₁-C₄-alkoxy-substituted C₁-C₄-alkoxycarbonylamino.

2. The use of the azo dyes of claim 1 for dyeing or printing textile fibers or fabrics.

3. The use of aminobenzisothiazoles of the formula II 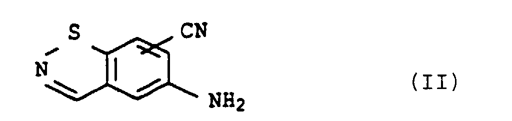 as diazo components in the synthesis of azo dyes.

## Revendications

1. Colorants azoïques de formule I 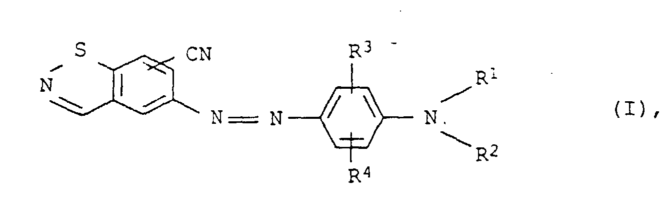 dans laquelle
R¹ et R² sont identiques ou différents et signifient chacun indépendamment l'un de l'autre, un groupement alkyle en C₁-C₁₀, qui est éventuellement interrompu par 1 ou 2 atomes d'oxygène en fonction éther et qui peut être substitué par un groupement phényle, cyano, alcoxycarbonyle en C₁-C₄, alcoxycarbonyloxy en C₁-C₄, hydroxy ou alcanoyloxy en C₁-C₄, ou bien un groupement alcényle en C₃-C₄ éventuellement substitué par un atome de chlore ou bien R¹ signifie en outre un atome d'hydrogène,
R³ représente un atome d'hydrogène ou un groupement alcoxy en C₁-C₄ et
R⁴ représente un groupement alkyle en C₁-C₆, alcoxy en C₁-C₄, - alcanoylamino en C₁-C₈ éventuellement substitué par un atome d'halogène, un groupement cyano, hydroxy, alcoxy en C₁-C₄, phénoxy ou alcanoyloxy en C₁-C₄, un groupement alkylsulfonylamino en C₁-C₄, alcénoylamino en C₃-C₄, ou alcoxycarbonylamino en C₁-C₄ éventuellement substitué par un groupement alcoxy en C₁-C₄.

2. Utilisation des colorants azoïques selon la revendication 1 pour la teinture ou l'impression de fibres textiles ou de tissus.

3. Utilisation d'aminobenzisothiazoles de formule II 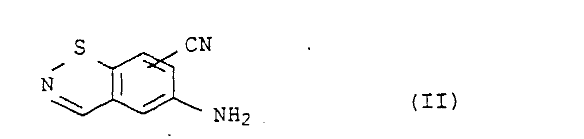 en tant que composant diazoïque dans la fabrication de colorants azoïques.
